# EUROPEAN PATENT SPECIFICATION

(11) **EP 0 607 173 B1**
(45) Date of publication and mention of the grant of the patent: **09.07.1997**
(21) Application number: 92919278.9
(22) Date of filing: 19.08.1992
(51) Int. Cl.: B65D 90/02, B65D 90/50, B65H 81/02, G01M 3/04

(54) **METHOD OF MAKING MULTI-WALLED STORAGE TANKS AND PRODUCTS**
VERFAHREN ZUR HERSTELLUNG VON LAGERTANKS UND DERGLEICHEN MIT MEHRFACHWENDUNG
PROCEDE DE FABRICATION DE CITERNES A MULTI-CLOISONS ET PRODUITS AINSI OBTENUS

(30) Priority: 11.10.1991 US 775208
(43) Date of publication of application: 27.07.1994
(73) Proprietor: Kauffman, Theresa M., Kennesaw Georgia 30144 (US); Williamson, George L., Daphne Alabama 36526 (US); Boswell, Joseph J., Mobile Alabama 36608 (US); Burdick, Martha Ann, Mobile Alabama 36608 (US)
(72) Inventor: Kauffman, Donn K., Kenessaw Georgia 30144 (US)
(74) Representative: Pacitti, Pierpaolo A.M.E.
(86) International application number: US9206981
(87) International publication number: WO9307073

(56) References cited:
- US-A- 3 335 903
- US-A- 3 335 904
- US-A- 3 394 841
- US-A- 3 412 891
- US-A- 3 489 311
- US-A- 3 661 294
- US-A- 3 796 620
- US-A- 3 931 908
- US-A- 4 739 659
- US-A- 4 778 075
- US-A- 4 781 777
- US-A- 4 869 386
- US-A- 4 876 124
- US-A- 4 925 046

## Description

### Technical Field

This invention generally relates to rigid structures such as pipes and storage tanks for underground and/or aboveground placement which are used for transporting and holding hazardous, toxic, and/or corrosive liquids, fluids and petroleum products such as solvents, diesel fuel and/or gasoline. This invention also relates to a method of manufacturing such pipes and tanks.

It is well known that in transporting certain gases and liquids, it is often necessary to use container vessels having superior wall strength which protect the contents against changes in temperatures, the environment and unanticipated mechanical stresses such as those encountered during transportation and construction. For example, in order to provide insulation against thermal changes of the contents of such vessels, and insure against the vessel's temperature induced rupture, it is desirable to use reinforcing materials such as fiber reinforced plastics, lightweight non-corrosive metals, protective linings of glass and multilayer vessel construction of varying protective shapes all of which have been found useful.

An increasing number of Federal Regulations relating to the design and strength of certain storage vessels to better insure containment of toxic or corrosive materials and to avoid contamination of the environment by release, now provide for double walled tanks, some of which permit leak alarms to be installed in the tanks. In many instances heretofore, the space between the layers in multilayer pipes and tanks walls was usually filled with air, insulating material or rigid support members to avoid rupture of the container walls under stress.

### Background Art

Numerous attempts have been made to provide pressure-tight and leak proof containers able to withstand stress caused by lateral forces utilizing the placement of seams, bolts and/or other supports, for example, in addition to placing detection systems in the event of fluid leaks.

In U.S. Patent 4,098,426 for example, the use of unpartitioned end walls coupled with support flanges was used in order to optimize the transmission of axial forces of inertia and to prevent fluid leakage at the joint seams of the two container shells of steel or aluminum alloy. Because the ultimate use of these metal tanks was for cryogenically effected fluids, a foamed insulating material was loosely provided between the vessels for insulation purposes. However no indication is provided as to the relative strength of those vessels, neither were any ribs integrated into the insulating wall for support.

Still other references are found such as U.S. 3,392,865 where filament-wound plastic shells employ closed shell polyurethane foams for thermal protection where a bleeder ply was used to provide gas conductance to a pressure tap in the event of gas leakage but again no indication is made as to the strength of the vessels described and in particular to the values of the lateral and axial inertia. Similarly, no method for making the interior containment wall comprising integrated ribs for support and positive total attachment is disclosed.

Anderson, in U. S. Patent Number 3,335,904, disclosed a non-metallic horizontal storage tank especially suitable for the underground storage of liquid hydrocarbons comprising a plastic sandwich construction having an enclosing wall forming a tubular body portion and end walls defining a substantially closed hollow structure, said tank including an inner skin and an outer skin space therefrom and including core material of relatively low structural strength between said skins, the tubular body portion having circumferential reinforcing rib means between said inner and outer skins. Bastone, in U.S. Patent Number 3,412,891, discloses an underground storage tank, including layers of continuous filament wound fiberglass with layers of chopped fiberglass reinforced resin to produce a monolithic composite layer structure. Furthermore, Bastone teaches the use of a polyurethane foam support rib. Sharp, in U. S. Patent Number 4,739,659, disclosed a double wall ribbed storage tank with secondary containment capability including the provision of a leak alarm safety monitor. Dallum, in U. S. Patent Number, 4,876,124, disclosed a tank having a composite wall including an inner wall and an outer wall, the inner wall comprising a material resistant to corrosion by gasoline or alcohol and the outer wall comprising a non-hydrolyzable resin.

However, none of the prior art includes the unique and novel features of the present invention.

From these and other references, it will be understood to those skilled in the art that multi-walled fiberglass reinforced fluid holding tanks require improved strength, extreme resistance to lateral pressure and require a high axial force of inertia.

### Disclosure Of Invention

It is an object of this invention to provide a process for making storage tanks and conducting pipe for the passage of fluids which possess a high axial force of inertia, are extremely rigid and are resistant to the stress of variable temperatures and movement.

It is a further object to provide pipes and storage tanks of improved strength which are resistant to pressure when placed underground and which can be made quickly and inexpensively.

The present invention provides for multi-walled tanks and pipes having an inner wall and an outer wall separated by and supported by ribs which are 100% bonded to and integrally bonded with and/or laminated to the inner and outer walls. The walls are composed of chopped and continuous glass fiber strands impregnated with resin. Closed cell foam is also provided in the interstitial spaces between the walls. Additionally, a highly chemically resistant barrier is mixed with the chopped glass fiber and is applied to the entire inner surface of the inner wall and the dished ends of the tanks. Furthermore, a leak alarm conduit is provided running along the tank bottom longitudinally and up and to the center of the dished ends of the tank. Further, spaces are provided on the outer surface of the inner wall to allow liquid materials, which would result from a leak, to flow or migrate to the leak alarm conduit. Tanks are designed with compartments in order to allow a leak alarm to indicate the exact location of a leak. This design provides for a tank that has improved strength characteristics and the present invention provides for a tank having a moment of inertia of about 4.67 in⁴ (1943800 mm⁴) which substantially eliminates torquing, buckling and rupturing. The term "fiberglass" as used in this specification will generally denote glass fiber reinforced resinous material either cured or uncured. When a glass fiber reinforced resinous material cures, it hardens and is frequently referred to in the industry as a laminate meaning generally the cured composite structure. Also, depending on the context, the term "fiberglass" may at times refer to glass fiber or a thin layer of woven glass fibers.

A method for constructing the tanks and pipes of the present invention is also provided. In summary, this includes forming a highly chemically resistant barrier about a first removal sheet on a mandrel, thereafter forming an inner-wall of chopped and continuous glass strands with resin over the barrier, adding a leak alarm conduit, applying rib shaped foam which acts as a form for the formation of the support ribs and thereafter forming the support ribs over the rib shaped foam. After formation of the ribs, bridging foam is placed between the ribs. Over this, chopped and continuous glass strands with resin are added to form the outer wall.

These and other objects are achieved in the present invention by providing an improved multi-walled storage tank of high strength and rigid construction whose method of construction is simple and less time consuming than the prior art.

A further object of the present invention is to provide a new and novel underground and/or aboveground fluid storage tanks which provides for an optional safety monitor in the event of fluid leakage or spillage. The present invention provides the only true environmental protection double wall tank with a positive leak alarm that is actuated within a short time of the leak. This tank is designed with compartments or alternating closed cells which enables the leak alarm to indicate the exact location of the leak. This eliminates the need to remove the tank from the ground to find the leak or perform a clean-up of the tank and/or soil, saving a great deal of time, money and product lost into the ground. The compartmentalized tank can be repaired in place because the alarm locates the leak accurately and indicates it on the computer readout.

The present invention provides tanks and pipes having a 100% bond between the ribs and the inner and outer structural wall of the tank. The present invention improves over the prior art tanks of this type by intergrating the construction of the cylindrical walls, the reinforcing ribs, and the foam material between the walls. The ribs are built up over the rib shaped foam bands which act as forms for the ribs, so that the ribs and rib feet become laminated to the inner wall. The outer wall is then built up over the ribs and the bridging foam layer located between the ribs, so that the outer wall becomes laminated and bonded to the ribs and results in a relatively level, smooth wall having no undulations. This intergration of the ribs and the tank walls provides greater strength than do other constructions wherein the parts are not positively interconnected and 100% bonded, locked, interlocked, and more particularly, immovably locked to each other. The bridging foam which is placed between the ribs acts merely as an aid to assure that the outer-wall is 100% bonded to the top of the rib, i.e., the foam in between the ribs is only there to act as a form so as to allow the outer wall to be layed up evenly without wrinkling. This integrated construction increases the moment of inertia so that this tank can be placed on the ground with no side support and when being filled will not deflect (See Example 5). No other currently available fiberglass tank can be filled unless backfill is added and compacted to the same level of the product inside the tank in order to prevent the sidewalls of the tank from bulging outward. Furthermore, this tank is the only fiberglass double-walled tank that does not require support from the surrounding soil to keep the tank round, i.e., to keep the tank from deflecting which could cause a failure.

The closed cell foam material used in the present invention is somewhat compressible. It is a further object of the present invention, to assure that no material, e.g. foam, is placed in the interstitial spaces between the walls of the present invention that could cause a rupture, collapse or other failure due to the interaction of materials having different thermal coefficients of expansion which interaction could be caused by changing temperature conditions.

### Brief Description Of The Drawings

Figure 1 is one embodiment of a cross-section perspective of the present invention showing a multi-walled storage tank.

Figure 2 is one embodiment of a cross-section of the tank or pipe wall of the present invention.

Figure 3 is one embodiment of another cross-section of the tank or pipe wall of the present invention.

Figure 4 is an elevation view of a buckling tank.

Figure 5 is an elevation view of a normally round underground storage tank.

Figure 6 is a cross-section of rib-shaped foam being held in place by continuous glass strands.

Figure 7 is a cross-section of the completely formed rib over the rib-shaped foam.

Figure 8 is a cross-section of the bridging foam which is placed between the ribs being held in place by continuous glass strands.

Figure 9 is a cross-section showing another embodiment of the present invention.

Figure 10 is an elevation view of another embodiment of the present invention shown in Figure 9.

### Best Mode For Carrying Out The Invention

Containment vessels, such as tanks for underground storage, and pipes made with locating bell sections and joined by welding, joining a wet joint or butt joint thereafter, are useful in transporting and holding fluids such as petroleum products like gasoline, alcohol enhanced gasoline, jet fuel, diesel fuel, oxygenated fuels, fuel oil with certain temperature limitations, and corrosive substances and the like which spillage thereof would be environmentally detrimental, costly and dangerous. The tanks of the present invention, for example, are composed of multi-containment walls or layers constructed of fiberglass or glass fibers in continuous windings and chopped glass fibers bonded with a suitable resin. It should be noted that the term "fiberglass" as used in this specification will generally refer to a glass fiber reinforced resinous material either cured or uncured. When a glass fiber reinforced resinous material cures, it hardens and is frequently referred to in the industry as a laminate meaning generally the cured composite structure. Also, depending on the context, the term "fiberglass" may at times refer to glass fiber strands. Between these layers, in the air space or interstitial space, is placed closed cell foam such as a urethane foam, between the outer wall of the vessel, tank or pipe and the inner wall of the tank. In a preferred embodiment, a leak alarm conduit is placed between these walls in order to detect fluid leaks and provide an appropriate alarm to the operator.

As a buried structure, the tank is subjected to a variety of stresses. Each unit must be able to resist deflection equaling not more than 2% of its diameter. Also, the tank vessels must be able to withstand the loads due to soil overburden. Soil density, soil consistency, degree of compaction, and bedding angle all play an integral part in determining the required stiffness factor. An additional benefit realized from designing the present invention for worst case underground conditions is a stronger structure that resists breakage during handling.

In the event of a process or operational failure yielding a partial vacuum on the tank, the structure must likewise resist buckling. Unfortunately, with negative internal pressure, all benefit from soil support is lost. The storage tanks of the present invention are designed, and have been successfully tested, to withstand a combination of external loads due to burial and negative internal pressure due to partial vacuum unlike those of the prior art (See Example 5). This is a unique and novel improvement of the present invention over the prior art.

Replacement of the air between the walls or interstitial space with a continuous core material, such as polyurethane and the like, improves the insulative qualities of the tank and results in decreased condensation of moisture in the inner tanks.

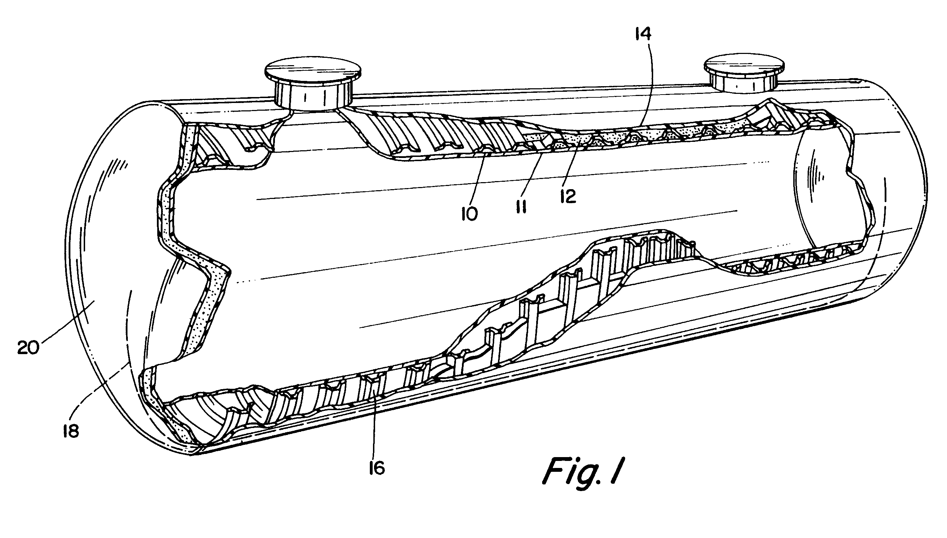

Turning to the drawings, the storage tank shown in Figure 1 comprises a first or inner containment wall or layer (10) of chopped and continuous glass fiber strands and resin having a highly chemically resistant barrier on its inner surface (11). Over this, is a layer of closed cell foam (12) in the interstitial space. The second or outer containment wall or layer (14) is comprised of chopped and continuous glass fiber strands and polyester resin similar to the first layer. The fiberglass or glass fiber reinforced resinous material urethane ribs (16) are more or less evenly spaced circumferentially at predetermined stress points and are in integral contact with and are 100% bonded to the inner and outer walls. A leak alarm conduit (18) runs along and contiguous with the outer surface of the inner wall, i.e., longitudinally along the bottom of the tank and up to the approximate middle of the dished tank ends (20).

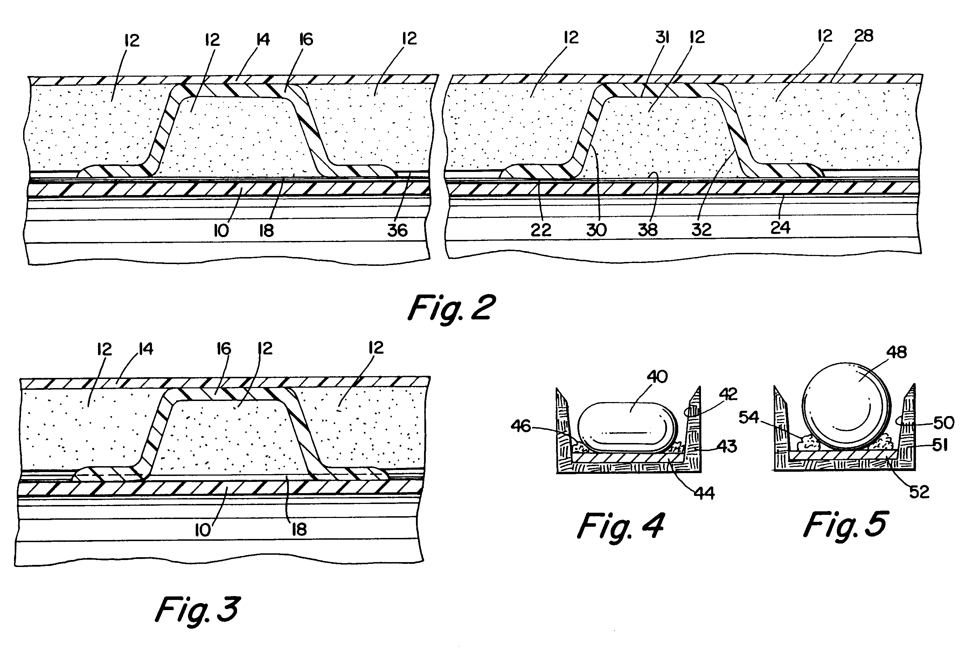

Figure 2 shows a cross-section of the tank or pipe wall taken along the leak alarm conduit. Therein is shown the inner wall (10). A leak alarm conduit (18) is placed on the outer surface of the inner wall running longitudinally along the tank. The reinforcing ribs (16) are shown in integral contact with the inner wall (10) and the level outer wall (14) with the foam (12) in between. The top of and feet of the ribs are bonded to each wall respectively at the contact points (22), (24), (26); and also with the closed cell foam (12) at the contact points (30), (31) and (32). The foam (12) almost completely fills the interstitial space between the walls, however, an approximate 1/8" (0.3175 cm) wide open space (36) is shown between the foam (12) and the outer surface of the inner wall (10) to allow liquid to flow to the leak alarm conduit. Also, note that while the foam is in close contact with the inner wall (10), it is not bonded to the inner wall (10) along the point (38) in order to provide a small space to allow liquid to flow to the leak alarm conduit. The foam (12) is bonded to the outer-wall (14) along the contact point (28).

Figure 3 shows another cross-section of the tank or pipe wall indicating the leak alarm conduit as a hidden line. The same general features of Figure 2 are shown again, being, the inner-wall (10), the closed cell foam (12), the outer wall (14), the ribs (16), and the leak alarm conduit (18). The purpose of Figure 3 is simply to show that the feet of the ribs pass over, surround and totally encase the leak alarm conduit thereby necessitating the hidden lines to show the leak alarm conduit (18).

Figure 4 is a cross-section elevation showing an underground storage tank which is in a bulging or buckled state. Therein, is shown the tank (40), an excavated hole (42) in the earth (43), a bed of fill material (44) underlying the tank and some backfilled material (46). Figure 4 is included to illustrate the type of buckling that can occur with a weaker type currently available storage tank. This type of failure will not occur with the present invention. Note that the type of failure shown in Figure 4 can result in a rupture and leaking situation which could cause severe soil and/or groundwater contamination.

Figure 5 shows an underground storage tank (48) of a normal configuration which is not buckled. Included is a hole (50) in the earth (51) along with a partial bed of fill material (52) including some backfill (54). This figure illustrates the configuation, i.e., "0" deflection, which results with a tank designed according to the present invention. This is futher explained in Example which follows.

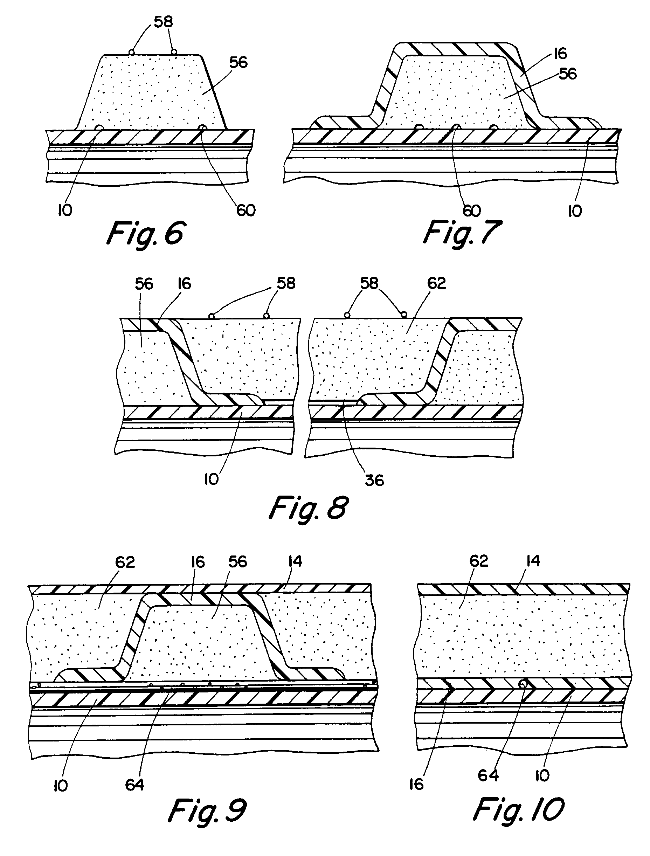

A more detailed description of the method of making the present invention follows: (1) A steel mandrel is assembled, but serves only as a mold or form for the fiberglass laminate and is not part of the tank or pipe itself; (2) An unsaturated polyester resin epoxy novolac-based vinyl ester, which is generally inert and/or impervious to chemicals and/or fuel additives, is applied concurrently with chopped glass fibers only and a glass fiber veil or "c" veil to an overlay comprising a first sheet such as a plastic film, e.g., MYLAR, or the like and cardboard, paperboard, or the like which overlaps the mandrel and permits easy removal of the formed tank. This forms a highly chemically resistant barrier in a thickness of from about 0.100" (0.254 cm) to about 0.120" (0.305 cm) and preferably from about 0.110" (0.279 cm) to about 0.114" (0.290 cm); (3) Chopped glass fibers and continuous glass fiber strands and resin are applied over the chemically resistant barrier to build up and form the inner wall to an approximate thickness of about 0.330" (0.838 cm). Increased structural strength is provided during this step by adding continuous fiberglass strands in a circulinear or hoop-like fashion circumferentially encompassing the tank. It is believed that applicant's tanks are the only tanks available commercially incorporating this advantage; (4) The leak alarm conduit is placed on and attached to the tank bottom and up to the center of the dished end of the tank; (5) Rib shaped foam is circumferentially applied about the inner wall without bonding there between and is held in place with continuous glass strands or bundles. This foam is pre-cut into the proper shape, i. e., pre-formed, for the ribs which will be formed by laminating over these rib-shaped foam sections. (See Figure 6 which follows); (6) In order to make glass fiber ribs on about 16 1/2" (41.91 cm) centers for separating and supporting the inner and outer walls, chopped and continuous glass fiber is used to overlay the rib shaped foam, made from suitable material such as polyurethane or the like, which was attached to the outer surface of inner wall in the preceding fifth step. The ribs are manufactured to a minimum 0.25" (0.635 cm) thickness. During this step, the feet of the ribs become 100% bonded, locked, interlocked, or immovably interlocked to the inner wall. However, the rib shaped foam does not become bonded to the inner wall so that liquid can flow downward toward the leak alarm conduit in the event of a leak in the inner wall. (See Figure 7 which follows); (7) To the tank now assembled with the ribs incorporated, closed cell bridging foam is applied between the ribs and up to, level with and flush with the top of the ribs. The relatively level and flat prepared surface formed by the tops of the ribs and the bridging foam prevents wrinkling or bubbling of the laminate which will next be laid up over the ribs and the bridging foam. This helps assure a strong, continuous, 100% bond between the ribs and the outer wall. Note that the bridging foam is pre-formed or pre-cut to provide an approximate 1/8" (0.3175 cm) air space between the foam and the outer surface of the inner tank wall so that liquid can flow downward toward the leak alarm conduit in the event of a leak in the inner wall. (See Figure 8 which follows); (8) It is over this that an outside laminated tank wall is formed and is applied over the formed and finished foam top and is contacted with and positively the formed and integrally incorporated ribs. The total laminate thickness on the outer wall is approximately the same as the inner wall laminate thickness. The resulting outer wall is relatively smooth, level and flat and has no ridges, valleys or undulations in it.

Note that the dished ends are formed on the mandrel at the same time and in the same step as the inner and outer walls, respectively, however, no support ribs are used in the dished ends since the configuration provides then- the necessary structural strength.

In Figure 6 there is shown a cross-section of the bridging foam (56) held in contact with the inner wall (10) by continuous glass strands (58). Additionally, another embodiment is illustrated in the foam comprising grooves (60) to a depth of about 1/4" (0.635 cm) cut into the face of the rib-shaped foam which faces and is in close contact with the inner wall (10). The gooves will allow liquid to more easily flow to the leak alarm conduit.

Figure 7, shows the inner wall (10), the rib-shaped foam (56), the ribs (16), and the embodiment of the grooves (60) cut into the rib-shaped foam. Figure 7, illustrates a cross-section of the present invention which results after the ribs are laminated over the rib-shaped foam.

Figure 8, shows a cross-section of the present invention after the ribs are formed and the bridging foam is put into place. Shown therein is the inner wall (10), the ribs (16), the rib-shaped foam (56), the bridging foam (62), which is held in place by continuous glass strands (58) along with the approximate 1/8" (0.3175 cm) space (36) provided between the bridging foam and the inner wall.

It should be obvious that multi-walled containers having as many walls are desired, e.g., 4 - 5 walls, could be built according to the methods previously described.

In practice, the tanks are completely built in two cylindrical halves including the dished ends prior to removing them from the mandrels and then joined together along with the appurtenances such as the leak alarm conduit to form the finished tank as previously described. It is necessary to form the tanks in halves in order to remove them from the mandrels. Pipes can be built as one piece, and not in halves, since they are open ended and can be removed from the mandrels by sliding the mandrels through the open pipe ends.

Where reinforcing materials are used, such as in the form of fiberglass, glass fiber reinforced resinous material, chopped or continuous roving or roving fabric, or any combination of these, the bond between the glass and the resin is provided by a suitable coupling agent. Fillers, additives and surfacing materials may also be used to advantage and are generally inert to both the environment and the contents of the tank or pipe. In addition, various agents such as promoters, ultraviolet light filters, catalysts and the like can also be employed. While a preferred method of manufacture encompasses filament winding, the basic manufacturing process may also be advantageously effected by centrifugal casting, contact-molding, compression molding, protrusion and various combinations thereof.

Because the dished ends of the tank are laid up in the same manner as the tanks themselves, they are an integral part of the tanks, having no joint seams or seam points to stress, thereby avoiding nuts and bolts capable of rupture. Note that the walls of the tank or vessel and the walls of the dished ends thereof are one piece.

A leak alarm conduit is present as a preferred embodiment. As shown in Figure 2, the leak alarm conduit (18) is placed between the foam (12) and contiguous with the outermost surface of the inner wall (10). Once the last fiberglass layer is laid down on the inner tank wall, and before the rib shaped foam is placed in what would otherwise be the interstitial space between the first and second containment wall or layer, the leak alarm conduit is set into place. Currently the PermAlert AT, a trademarked system for leak detection and space monitoring available from PermAlert Environmental Specialty Products Inc., a subsidiary of Midwesco, is being used. This monitors for installation irregularities, static moisture and standing liquid, droplets and/or other liquid intrusions by using probes and sensing cables in a single unified sensing string which pinpoints leaks in the system. Specific sensors are used depending on the fluids contained in the tank in order to detect liquid seepage, ruptures or breaks. This type technology is based on time domain reflectometry and operates somewhat like radar in that thousands of times each minute, energy pulses are sent out on a dry sensor conduit or cable; as the energy pulses travel down the sensor cable, reflections are returned to the monitoring unit which digitizes these echoes and creates a digital map of the entire length of the dry cable. This technology creates a new digital map every few seconds and compares the current map to the "dry" map stored in its memory. The presence of water or water based and hydrocarbon fluids around the sensor cable, in sufficient quantities to wet the cable, will alter its electrical properties. This alteration will cause a change in the reflection from that wet cable segment which change is recognized by the minitoring unit. When a change is recognized the minitoring unit checks to confirm the change before indicating an alarm condition and displaying the location of the problem. However, it should be noted that other types of leak alarm conduits could possibly be used with the present invention. By way of example, a hydrocarbon specific cable which ignores water could be used. Leak alarm output indicates various data including the fault condition at a leak or break, distance of fault to data retrieval location, date, and time of fault. The cable is reusable after repair and clean up. The conduit is attached to a monitor capable of alerting the operator and providing the above information.

By way of example, Figures 9 and 10 are offered to illustrate another embodiment of a different type leak detection system. In Figure 9, there is shown the inner wall (10), the ribs (16), the outer wall (14), the bridging foam (62), the rib-shaped foam (56) and a flow through pipe or conduit (64), e. g., pvc pipe which is perforated in order to allow liquids to enter into the pipe and flow throughout the compartments or cells of the tank throughout the length of the tank. Note in Figure 9 that the flow through conduit (64) is not perforated in the area under the rib feet in order to keep the liquid resin materials prior to curing during construction from leaking through the perforations of the pipe into the inside of the pipe and thereafter hardening and blocking the inside of the pipe so that no liquids could flow through the pipe. Figure 10, is a side elevation view of Figure 9 showing the inner wall (10), the outer wall (14), the rib feet (16), the bridging foam (62), and the flow through pipe or conduit (64) encased in the rib feet. In practice, it is anticipated that these flow through pipes could alternatively be placed near the bottom of the tank, midway up the sides of the tank, and/or near the top of the tank in order to capture all leaks of either liquids or vapors.

Because of the unusual strength provided by the method of construction of the present invention, it is possible to make tanks varying in size and volume from about 4 feet (1.219 m) in diameter to about 12 feet (3.658 m) in diameter and having a length of from about 18 feet (5.486 m) to about 37 feet (11.278 m). The pipe sections can also vary from about 20 feet (6.096 m) to about 60 feet (18.288 m) and from about 14 inches (0.355 m) diameter to about 144 inches (3.658 m). The general shapes for the pipes and tanks are circular in cross section when assembled. However, it is believed that non-circular shapes could also be manufactured and could be useful for certain applications similar to the various shapes of concrete pipe used for different applications.

Although several specific examples of the inventive concept have been described for purposes of illustration, the invention should not be construed as limited thereby or to the specific features mentioned herein except as they may be included in the claims appended hereto as interpreted by the prior art. It is also understood that certain changes can be made without departing from the spirit and scope of the present invention.

Several Examples follow which further define and teach various aspects of the present invention.

### Example 1

A steel mandrel is prepared and covered over with plastic film and cardboard to facilitate removal of the plastic tank from the mold when finished.

A double layer of fiberglass, i.e., glass fiber veil or "c" veil, commercially available and manufactured by Superior Glass Co. of Ohio is applied. These are wetted out with Derakane 470-36 vinylester resin, commercially available from Dow Chemical. The spraying procedure is continued non-stop with chopped glass fibers, available commercially as Pittsburgh Plate Glass (PPG) HYBON 600 gunroving until a total thickness of about 0.110 inch (0.279 cm) is applied. HYBON is glass filament with a specially treated finish for being used with and run through a chopper gun.

While this step is cooling after the peak exothermic reaction, chopped glass PPG HYBON 600 gunroving and continuous glass PPG .1064-247 filament winding glass is machine applied using polyester resin ISO available from Inter-Plastic Corp. (as COR 75-AA-OSO resin) to a measured thickness of about 0.220 inch (0.559 cm). The bond here is now both a chemical and mechanical bond and the total inner wall tank lamina thickness is about 0.330 inch (0.838 cm).

After curing, foam rib forms, made of closed cell urethane are now attached circumferentially to the outer surface of the inner tank by continuous glass stands or bundles thereof.

A preferred shape of the ribs on cross-section is a trapezoid, in which the parallel sides are about 4" (10.16 cm) in length on the base, i.e., between the feet, with its parallel side on top being about 2 1/2" (6.35 cm) in length. Each of the rib feet are about 2" (5.08 cm) in length. The equal and opposite sloping sides, angled at about 45° from the base, are about 1 3/4" (4.45 cm) in length.

The glass materials previously used to form the inner wall of the tank are applied over the rib-shaped foam forms and become laminated to the outside of the inner tank, forming a fiberglass rib having a glass thickness of about 1/4" (0.635 cm).

Next, the thus-formed inner wall in the spaces between the thus-formed urethane ribs are covered with about 1 1/2" (3.81 cm) thick closed cell urethane foam for bridging between the ribs. This foam forms an impervious skin and is pre-formed so as to be level with the top of the ribs giving a nominal thickness of approximately 1 1/4" (3.175 cm). Then using the same polyester resin, cut glass fibers and continuous glass fibers, the outer containment area is laid up as the outer tank wall, having a thickness of about 0.300" (0.762 cm).

### Example 2

The same procedure as described in Example 1 is used employing a mandrel sufficient in size to provide a tank section of about 30 feet (9.144 m) in length which includes circumferential urethane ribs as support spaced on centerlines of about 16 inches (0.406 m). The diameter is about 8 feet (2.438 m). These sections have one dished end on each end and, when joined by weld, have no joints seams or seamed ends where the walls and dished ends meet.

The resulting moment of inertia of the rib, outer wall, and inner wall is calculated at a minimum of about 4.675 in⁴ (194,6 cm⁴). The modulus of elasticity is determined as 9 x 10⁵ psi (130,5 Pa) representing contact molding. That modulus of elasticity is used to determine the resulting stiffness factor at 4.20 x 10⁶lb in² (2,89·10¹⁰N·mm²).

In order to determine certain physical tests more fully set forth and described by the American Society for Testing Materials, the following physical characteristics are determined from representative sections or panelling used in the manufacture of the tank and the elongated pipe sections.

| | ISO |
|---|---|
| Flexural Strength, psi, ASTM D790 | 24,600 (3,567 Pa) |
| Flexural Modulus, psi x 10⁵, ASTM D790 | 9.79 (142 Pa) |
| Tensile Strength, psi, ASTM D638 | 13,000 (1,89 Pa) |
| Tensile Modulus, psi x 10⁵, ASTM D638 | 11.5 (166,8 Pa) |
| Percent Elongation, ASTM D638 | 1.40 |
| Compression Strength, psi, ASTM D695 | 18,600 (2,70 Pa) |
| Hardness, Barcol 934, ASTM D2583 | 38-45 |
| Percent Non-Volatile, ASTM D2584 | 32.92 |

### Example 3

Using a mandrel which provides about 30 feet (9.144 m) in length and a diameter of about one foot (0.305 m), the same materials and process steps are employed to provide identical recurring sections of hollow, 2-containment layer sections without the dished ends which are then welded or otherwise joined together end-to-end to form seamless conducting pipe. These are corrosion-resistant and leak proof and extremely rigid.

### Example 4

Various tests are conducted to determined the (1) internal impact resistance (2) internal pressure and (3) surface hardness of a tank made according to the present process. These were found to be as follows by standards set forth in ASTM Standards, D4021-86:

| | |
|---|---|
| 1. ASTM D4021-86 | -8.9 and 6.9 |
| 2. ASTM D4021-86 | 8.5 |
| 3. ASTM D4021-86 | 8.12.3 |

### Example 5

A test tank was built from two cylindrical halves which were inspected during the manufacturing process. Prior to connecting the two halves the interior surfaces were inspected for fiber, cracking, crazing, large wrinkles and delaminations.

Barcol Hardness readings were conducted on exterior and interior surfaces of the halves, the readings were averaged and were as follows:
- Interior: 41.6
43.8
- Exterior: 33.6
37.2

After the halves were joined the exterior surface was inspected for fiber show, blisters and smoothness.

The tank was considered to be in satisfactory condition after all per-test inspections.

The test pit was prepared to meet the requirements of ASTM-4021-86. The tank was lowered into the pit and anchored. At this time a zero deflection reading was made.

The external load tests were then started.

The earth load test was the first test conducted. It consisted of covering the tank with pea gravel to a depth of 36 inches (0.9144 m) (±) 3 inches (7.62 cm) from the top of the tank. The deflection at the top of the tank was measured and recorded. Deflection was 1/16" (0.15875 cm).

A concentrated load was applied near the middle of the tank. A 25 ton (22,679.625 kg) ram on a steel plate that measured 20" (0.508 m) x 20" (0.508 m) placed on the pea gravel was used. Total load was 22,600 lbs. (10,251.19 kg) and deflection was 1/16" (0.15875 cm).

The pit was filled with water to 36 inches (0.9144 m) (±) 3 inches (7.62 cm) above the top of the tank. Deflection was measured as 0". The load was held for twenty-four hours and 0" deflection was noted.

The tank was sealed and a vacuum pump connected. The interior pressure was lowered to -5.5 inches (-13.97 cm) of Hg (Mercury) (1,048 Pa). The fluid in the pit was pumped into the tank to a level near the top of the tank. Air pressure was applied to the tank at a pressure of 25 psig (1,72·10⁵ Pa) and during the next minute the pressure dropped to 24 psig (1,65·10⁵ Pa).

The tank was pumped dry and removed from the pit. The unsupported tank was then connected to a vacuum pump and a negative pressure of 3.0 psig (2,07·10⁴ Pa) was attained. At this time, the internal impact test was performed. No damage was visually noted.

The tank was pressurized to 5 psig (3,44·10⁴ Pa) and the exterior was washed with a detergent and water solution. No leakage was detected.

Results of tests and inspections were satisfactory and conformed to ASTM D-4021-86.

### Example 6

A tank constructed substantially according to the teachings of the present invention has been tested by Underwriters Laboratories, Research Triangle Park, North Carolina using procedure UL 1316 or equivalent, entitled "Glass-Fiber-Reinforced Plastic Underground Storage Tanks For Petroleum Products". A summary of the test follows:
1. Pneumatic pressure to 5 psi (3,44·10⁴ Pa) was applied and held for 1 hour. (The tank may be transported to the hole site while under pressure.) No leaks were detected. A pipe fitting test was conducted using 3800 lbs. (1,723.65 kg) torque and the tank passed with no deflection.
2. Inspect the tank for leaks (make repairs if needed). No leaks at 5 psi (3,44·10⁴ Pa) were detected.
3. Set the tank into the hole.
4. Apply 600 gallons (2,271.12 liter) of water in the tank and lift for 1 second, and then do leakage test. The tank passed the test to add 4800 lbs. (2,177.24 kg) to tank. By mistake over 20,000 lbs. (9,071.85 kg) of water was added with no deflection, and then a leak test performed. No leaks were detected.
5. Fill the tank to capacity (1200 gallons) (4,542.24 liter). While the tank is filling, the strapping operation can be done. No deflection and no leaks were detected.
6. After the tank is strapped down and still filling with water the hole can be filled with pea gravel. No deflection and no leaks were detected.
7. When the tank is filled, hold for 1 hour and empty the water in the tank into the hole. The tank must stay in this condition for 24 hours. No deflection and no leaks were detected.
8. Pump the water out of the hole and into the tank, add water if necessary to fill the tank to capacity. Pressurize the tank to 25 psi (1,72·10⁵ Pa) and hold for 1 minute. No deflection and no leaks were detected.
9. Empty the tank and get it out of the hole.
10. Apply 5 psi (3,44·10⁴ Pa) air test and check for leaks. No leaks were detected.

## Claims

1. A process for making multi-walled vessels for transporting and storing fluids, comprising the steps of:
(a) Assembling on a suitable form or mold an overlay comprising a first sheet to receive a first layer of glass fiber reinforced resinous material;
(b) Applying a resinous material with chopped glass fibers over said first sheet to form a highly chemically resistant barrier;
(c) Applying over said highly chemically resistant barrier, a resinous material with chopped glass fibers and continuous strands of glass fibers;
(d) Curing said resinous material and said chopped glass fibers and continuous strands of glass fibers to form a first containment wall (10);
(e) Applying at predetermined points on said first containment wall substantially circumferential preformed continuous rib shaped foam (56), and securing said foam to said first containment wall (10); and
(f) Applying over said rib shaped foam chopped and continuous glass fibers with a resinous material to form a plurality of substantially circumferential ribs (16) integrally bonded to said first containment wall (10);
characterised in that the process comprises the further steps of:
(g) Applying and securing bridging foam (62) to said first containment wall between said ribs up to the level of the top of said ribs;
(h) Applying over said bridging foam and said ribs, a resinous material with chopped glass fibers and continuous strands of glass fibers; and
(i) Curing said resinous material and said chopped glass fibers and continuous strands of glass fibers to form a second containment wall (14) integrally bonded to said ribs.

2. The process of Claim 1, wherein said rib shaped foam (56) and said bridging foam (62) is comprised of polyurethane.

3. The process of Claim 1, wherein said ribs (16) are integrally bonded to each of said first (10) and second (14) containment walls of the vessel.

4. The process of Claim 1, wherein the vessels are joined together end-to-end to form continuous conducting pipe.

5. The process of Claim 1, further comprising attaching to said first containment wall a leak alarm safety monitor to detect liquid seepage.

6. The process of Claim 5, wherein said leak alarm safety monitor further comprises a conduit (18) running longitudinally along the entire length of the said vessel.

7. The process of Claim 6, wherein said conduit (18) is contiguous with the outer surface of said first containment wall (10).

8. The process of Claim 6, further comprising having said conduit (18) be totally encased by the feet of said support ribs (16).

9. The process of Claim 1, said vessel further comprising having dished ends (20).

10. The process of Claim 9, having dished ends (20) having no joint seams between the walls of the vessel and the walls of said dished ends.

11. The process of Claim 9, further comprising the walls of said vessel and the walls of said dished ends (20) being one piece.

12. The process of Claim 1, having an approximate 1/8" (0.3175 cm) space between said bridging foam (62) and said first containment wall (10).

13. The process of Claim 5, having said leak alarm safety monitor conduit (18) pinpoint the leak along the length of said vessel.

14. The process of Claim 6, having said leak alarm safety monitor conduit (18) run up to the approximate middle of said dished ends (20) and thereby monitor for leaks occurring in the dished ends of said vessel.

15. The process of Claim 1, having approximate 1/4" (0.635cm) grooves (60) in the face of said rib shaped foam (56) said face being contiguous with the outer surface of said first containment wall (10).

16. The process of Claim 1, further comprising sections of said vessel being joined together to form seamless conducting pipe.

17. The process of Claim 1, wherein said resinous material of step (b) further comprises vinylester resin.

18. The process of Claim 1, wherein said resinous material of steps (c), (d), (f), (h) and (i) further comprise polyester resin.

19. The process of Claim 1, further comprising the steps of:
(a) assembling on a suitable form or mold an overlay comprising cardboard;
(b) applying a first sheet over said cardboard;
(c) applying a resinous material with a glass fiber veil over said first sheet; and
(d) applying a resinous material with chopped glass fibers over said veil to form a highly chemically resistant barrier.

20. A multi-walled vessel for transporting and storing fluids, comprising;
(a) a first containment wall (10) comprised of chopped fiberglass and continuous fiberglass strands secured to each other by polyester resin, said first wall having a thickness of from about 0.300" (0.762 cm) to about 0.330" (0.838 cm);
(b) a highly chemically resistant barrier on the inner surface of said first containment wall;
(c) a plurality of substantially circumferential support ribs (16) integrally bonded to said first containment wall (10); and
(d) a first layer of closed cell foam (56) located between said first containment wall (10) and the inside surfaces of said support ribs (16); characterised by:
(e) said support ribs (16) having feet of about 2.0" (5.08 cm) each in length by means of which said support ribs become integrally bonded to said first containment wall (10);
(f) a second containment wall (14) comprised of chopped fiberglass and continuous fiberglass strands secured to each other by polyester resin, said second wall having a thickness of from about 0.250" (0.635 cm) to about 0.300" (0.762 cm);
(g) said second containment wall (14) having no undulations;
(h) said second containment wall (14) being integrally bonded to the top of said support ribs (16);
(i) a second layer of closed cell foam (62) located in the interstitial space between said first containment wall (10), said second containment wall (14) and the outside surfaces of said support ribs (16); and
(j) said second layer of closed cell foam (62) being level with the top of said support ribs (16).

21. The vessel of Claim 20, wherein said first and second layers of closed cell foam are comprised of polyurethane (12).

22. The vessel of Claim 20, further comprising a leak alarm safety monitor to detect liquid seepage.

23. The vessel of Claim 22, wherein said leak alarm safety monitor further comprises a conduit (18) running longitudinally along the entire length of said vessel.

24. The vessel of Claim 23, wherein said conduit (18) is contiguous with the outer surface of said first containment wall (10).

25. The vessel of Claim 23, wherein said conduit (18) is totally encased by said feet of said support ribs (16).

26. The vessel of Claim 20, further comprising dished ends (20) having no joint seams between said walls of said vessel and the walls of said dished ends.

27. The vessel of Claim 26, further comprising said walls of said vessel and said walls of said dished ends (20) being one piece.

28. The vessel of Claim 20, wherein an approximate 1/8" (0.3175 cm) space is provided between said first layer of closed cell foam (56) and said first containment wall (10).

29. The vessel of Claim 22, wherein said leak alarm safety monitor conduit (18) pinpoints the leak along the length of said vessel.

30. The vessel of Claim 22, wherein said leak alarm safety monitor conduit (18) runs up to the approximate middle of said dished ends and thereby monitors for leaks occurring in the dished ends (20) of said vessel.

31. The vessel of Claim 20, wherein approximate 1.4" (0.635 cm) grooves (60) are provided in the face of said first layer of closed cell foam (56) said face being contiguous with the outer surface of said first containment wall (10).

32. The vessel of Claim 20, further comprising sections of said vessel being joined together to form seamless conducting pipe.

## Patentansprüche

1. Verfahren zur Herstellung von Behältern mit Mehrfachwandung zum Transport und zur Lagerung von Flüssigkeiten, aus den folgenden Schritten bestehend:
(a) Montieren einer Auflage, bestehend aus einer ersten Lage, die mit einer ersten Schicht aus glasfaserverstärktem Harzmaterial ausgestattet wird, auf einer geeigneten Form oder einem geeigneten Formstück;
(b) Auftragen eines Harzmaterials mit Schnittglasfasern auf der ersten Lage zur Bildung einer chemisch hochbeständigen Sperre;
(c) Auftragen eines Harzmaterials mit Schnittglasfasern und fortlaufenden Glasfaserlitzen auf der chemisch hochbeständigen Sperre;
(d) Aushärten des Harzmaterials und der Schnittglasfasern und fortlaufenden Glasfaserlitzen zur Bildung einer ersten Sicherheitswand (10);
(e) Auftragen eines im wesentlichen entlang des Umfangs verlaufenden, vorgeformten, fortlaufenden, rippenförmigen Schaums (56) an vorgegebenen Punkten der ersten Sicherheitswand und Befestigung des Schaums an der ersten Sicherheitswand (10); sowie
(f) Auftragen von fortlaufenden Schnittglasfasern mit einem Harzmaterial auf dem rippenförmigen Schaum zur Bildung einer Vielzahl von im wesentlichen entlang des Umfangs verlaufenden Rippen (16), die vollkommen mit der ersten Sicherheitswand (10) verbunden sind;
dadurch gekennzeichnet, daß das Verfahren weiterhin aus den folgenden Schritten besteht:
(g) Auftragen und Befestigung von Füllschaum (62) auf der ersten Sicherheitswand zwischen den Rippen bis zur Höhe des oberen Endes der Rippen;
(h) Auftragen eines Harzmaterials mit Schnittglasfasern und fortlaufenden Glasfaserlitzen auf dem Füllschaum und den Rippen; sowie
(i) Aushärten des Harzmaterials und der Schnittglasfasern und fortlaufenden Glasfaserlitzen zur Bildung einer zweiten Sicherheitswand (14), die vollkommen mit den Rippen verbunden ist.

2. Verfahren nach Anspruch 1, wobei der rippenförmige Schaum (56) und der Füllschaum (62) aus Polyurethan bestehen.

3. Verfahren nach Anspruch 1, wobei die Rippen (16) vollkommen sowohl mit der ersten (10) als auch mit der zweiten (14) Sicherheitswand des Behälters verbunden sind.

4. Verfahren nach Anspruch 1, wobei die Enden der Behälter zur Bildung eines fortlaufenden Leitrohres aneinandergefügt werden.

5. Verfahren nach Anspruch 1, wobei weiterhin an der ersten Sicherheitswand ein Leckalarmsicherheitsmonitor zum Feststellen von Flüssigkeitsaustritt angebracht wird.

6. Verfahren nach Anspruch 5, wobei der Leckalarmsicherheitsmonitor weiterhin eine Rinne (18) aufweist, die longitudinal entlang der gesamten Länge des Behälters verläuft.

7. Verfahren nach Anspruch 6, wobei die Rinne (18) an die Außenfläche der ersten Sicherheitswand (10) grenzt.

8. Verfahren nach Anspruch 6, wobei die Rinne (18) weiterhin vollkommen von den unteren Enden der Stützrippen (16) ummantelt ist.

9. Verfahren nach Anspruch 1, wobei der Behälter außerdem konkave Endstücke hat (20).

10. Verfahren nach Anspruch 9, wobei die konkaven Endstücke (20) keine gemeinsamen Nahtstellen zwischen den Wandungen des Behälters und den Wandungen der konkaven Endstücke aufweisen.

11. Verfahren nach Anspruch 9, wobei weiterhin die Wandungen des Behälters und die Wandungen der konkaven Endstücke (20) aus einem Stück sind.

12. Verfahren nach Anspruch 1, wobei der Zwischenraum zwischen dem Füllschaum (62) und der ersten Sicherheitswand (10) ungefähr 1\8" (0,3175 cm) beträgt.

13. Verfahren nach Anspruch 5, wobei die Rinne (18) des Leckalarmsicherheitsmonitors das Leck entlang der Länge des Behälters genau ermittelt.

14. Verfahren nach Anspruch 6, wobei die Rinne (18) des Leckalarmsicherheitsmonitors ungefähr bis in die Mitte der konkaven Endstücke (20) verläuft und dabei überwacht, ob an den konkaven Endstücken des Behälters Lecke auftreten.

15. Verfahren nach Anspruch 1, wobei die Stirnfläche des rippenförmigen Schaums (56) Schlitze (60) von ungefähr 1\4" (0,635 cm) aufweist, und die Stirnfläche an die Außenfläche der ersten Sicherheitswand (10) angrenzt.

16. Verfahren nach Anspruch 1, wobei weiterhin Teilstücke des Behälters zur Bildung eines nahtlosen Leitrohres aneinandergefügt werden.

17. Verfahren nach Anspruch 1, wobei das Harzmaterial aus Schritt (b) außerdem aus Vinylesterharz besteht.

18. Verfahren nach Anspruch 1, wobei das Harzmaterial aus den Schritten (c), (d), (f), (h) und (i) außerdem aus Poyesterharz besteht.

19. Verfahren nach Anspruch 1, das weiterhin folgende Schritte umfaßt:
(a) Montieren einer aus Pappe bestehenden Auflage auf eine geeignete Form oder ein geeignetes Formstück;
(b) Auftragen einer ersten Lage auf die Pappe;
(c) Auftragen eines Harzmaterials mit einem Glasfaserschleier auf der ersten Lage; sowie
(d) Auftragen eines Harzmaterials mit Schnittglasfasern auf dem Schleier zur Bildung einer chemisch hochbeständigen Sperre.

20. Behälter mit Mehrfachwandung zum Transport und zur Lagerung von Flüssigkeiten, bestehend aus:
(a) einer ersten Sicherheitswand (10), die aus Schnittglasfasern und fortlaufenden Glasfaserlitzen besteht, die jeweils mit Polyesterharz aneinander befestigt sind, wobei die erste Wand eine Dicke von ungefähr 0,300" (0,762 cm) bis zu 0,330" (0,838 cm) hat;
(b) einer chemisch hochbeständigen Sperre auf der Innenfläche der ersten Sicherheitswand;
(c) einer Vielzahl von im wesentlichen entlang des Umfangs verlaufenden Stützrippen (16), die vollkommen mit der ersten Sicherheitswand (10) verbunden sind; sowie
(d) einer ersten Schicht aus geschlossenzelligem Schaum (56), die sich zwischen der ersten Sicherheitswand (10) und den Innenflächen der Stützrippen (16) befindet;
dadurch gekennzeichnet, daß
(e) die Stützrippen (16) jeweils untere Enden von ungefähr 2,0" (5,08 cm) Länge haben, wodurch die Stützrippen vollkommen mit der ersten Sicherheitswand (10) verbunden werden;
(f) einer zweiten Sicherheitswand (14), die aus Schnittglasfaser und fortlaufenden Glasfaserlitzen besteht, die jeweils mit Polyesterharz aneinander befestigt sind, wobei die zweite Wand eine Dicke von ungefähr 0,250" (0,635 cm) bis zu 0,300" (0,762 cm) hat;
(g) der zweiten Sicherheitswand (14), die keine Welligkeiten aufweist;
(h) der zweiten Sicherheitswand (14), die vollkommen mit dem oberen Ende der Stützrippen (16) verbunden ist;
(i) einer zweiten Schicht aus geschlossenzelligem Schaum (62), die sich in dem Zwischenraum zwischen der ersten Sicherheitswand (10), der zweiten Sicherheitswand (14) und den Außenflächen der Stützrippen (16) befindet; sowie
(j) der zweiten Schicht aus geschlossenzelligem Schaum (62), die sich auf gleicher Höhe mit dem oberen Ende der Stützrippen (16) befindet.

21. Behälter nach Anspruch 20, wobei die erste und die zweite Schicht aus geschlossenzelligem Schaum aus Polyurethan (12) bestehen.

22. Behälter nach Anspruch 20, der weiterhin einen Leckalarmsicherheitsmonitor zum Feststellen von Flüssigkeitsaustritt aufweist.

23. Behälter nach Anspruch 22, wobei der Leckalarmsicherheitsmonitor außerdem eine Rinne (18) aufweist, die longitudinal entlang der gesamten Länge des Behälters verläuft.

24. Behälter nach Anspruch 23, wobei die Rinne (18) an die Außenfläche der ersten Sicherheitswand (10) angrenzt.

25. Behälter nach Anspruch 23, wobei die Rinne (18) vollkommen von den unteren Enden der Stützrippen (16) ummantelt ist.

26. Behälter nach Anspruch 20, der außerdem konkave Endstücke (20) hat, die keine gemeinsamen Nahtstellen zwischen den Wandungen des Behälters und den Wandungen der konkaven Endstücke aufweisen.

27. Behälter nach Anspruch 26, bei dem weiterhin die Wandungen des Behälters und die Wandungen der konkaven Endstücke (20) aus einem Stück sind.

28. Behälter nach Anspruch 20, der einen Zwischenraum von ungefähr 1\8" (0,3175 cm) zwischen der ersten Schicht aus geschlossenzelligem Schaum (56) und der ersten Sicherheitswand (10) aufweist.

29. Behälter nach Anspruch 22, bei dem die Rinne (18) des Leckalarmsicherheitsmonitors das Leck entlang der Länge des Behälters genau ermittelt.

30. Behälter nach Anspruch 22, bei dem die Rinne (18) des Leckalarmsicherheitsmonitors ungefähr bis in die Mitte der konkaven Endstücke verläuft und dabei überwacht, ob an den konkaven Endstücken (20) des Behälters Lecke auftreten.

31. Behälter nach Anspruch 20, der in der Stirnfläche der ersten Schicht aus geschlossenzelligem Schaum (56) Schlitze (60) von ungefähr 1,4" (0,635 cm) aufweist, wobei die Stirnfläche an die Außenfläche der ersten Sicherheitswand (10) angrenzt.

32. Behälter nach Anspruch 20, bei dem weiterhin Teilstücke des Behälters zur Bildung eines nahtlosen Leitrohres aneinandergefügt werden.

## Revendications

1. Un procédé de fabrication de citernes à multi-cloisons pour le transport et stockage de fluides, comprenant les étapes de :
a. assembler sur une forme ou moule convenable un revêtement comprenant une première tôle pour reçevoir une première couche de matériau de résine renforcée de fibre de verre ;
b. appliquer un materiau de résine à fibres de verre coupées sur ladite première tôle afin de former une barrière hautement résistante chimiquement ;
c. appliquer sur ladite barrière hautement résistante chimiquement, un matériau de résine à fibres de verre coupées et des fils continus de fibre de verre ;
d. vulcaniser ledit matériau de résine et lesdites fibres de verre coupées et fils continus de fibres de verre afin de former une première cloison de confinement (10) ;
e. appliquer aux endroits prédéfinis sur ladite première cloison de confinement une mousse de forme nervurée continue préformée substanciellemment circonférentielle (56) et fixer ladite mousse à ladite première cloison de confinement (10) ; et
f. appliquer sur ladite mousse de forme nervurée des fibres de verre coupées et continues avec un matériau de résine afin de former une pluralité de nervures substanciellement circonférentielles (16) collées intégralement à ladite première cloison de confinement (10) ;
caractérisé en ce que le procédé comprend en outre les étapes de :
g. appliquer et fixer une mousse de raccordement (62) à ladite première cloison de confinement entre lesdites nervures jusqu'au niveau supérieure desdites nervures ;
h. appliquer sur ladite mousse de raccordement et lesdites nervures un matériau de résine à fibres de verres coupées et fils continus de fibres de verre ; et
i. vulcaniser ledit matériau de résine et lesdites fibres de verre coupées et fils continus de fibres de verre afin de former une deuxième cloison de confinement (14) intégralement collée auxdites nervures.

2. Le procédé de la Revendication 1, dans lequel ladite mousse de forme nervurée (56) et ladite mousse de raccordement (62) sont composées de polyuréthane.

3. Le procédé de la Revendication 1, dans lequel lesdites nervures (16) sont intégralement collées à chacune desdites première (10) et deuxième (14) cloisons de confinement de la citerne.

4. Le procédé de la Revendication 1, dans lequel les citernes sont mises bout à bout afin de former un tuyau conducteur continu.

5. Le procédé de la Revendication 1, comprenant en outre un moniteur de sécurité avertisseur de fuite pour détecter le suintement de liquides.

6. Le procédé de la Revendication 5, dans lequel ledit moniteur de sécurité avertisseur de fuite comprend en outre un conduit (18) s'étendant longitudinalement sur toute la longueur de ladite citerne.

7. Le procédé de la Revendication 6, dans lequel ledit conduit (18) est contigu à la surface extérieure de ladite première cloison de confienement (10).

8. Le procédé de la Revendication 6, ayant en outre ledit conduit (18) entièrement enrobé par les pieds desdites nervures de support (16).

9. Le procédé de la Revendication 1, dans lequel ladite citerne comprend en outre des fonds bombés (20).

10. Le procédé de la Revendication 9, ayant des fonds bombés (20) sans lignes de joint entre les cloisons de la citerne et les cloisons desdites extrémités embouties.

11. Le procédé de la Revendication 9, dans lequel les cloisons de ladite citerne et les cloisons desdites extrémités embouties (20) constituent en outre une seule partie.

12. Le procédé de la Revendication 1, ayant un espace d'environ 1/8" (0.3175 cm) entre ladite mousse de raccordement (62) et ladite première cloison de confinement (10).

13. Le procédé de la Revendication 5, dans lequel ledit conduit du moniteur de sécurité avertisseur de fuite (18) localise la fuite sur la longueur de ladite citerne.

14. Le procédé de la Revendication 6, dans lequel ledit conduit du moniteur de sécurité avertiseeur de fuite (18) s'étend jusqu'au milieu approximatif desdits fonds bombés (20) et surveille ainsi des fuites susceptibles d'arriver dans les fonds bombés de ladite citerne.

15. Le procédé de la Revendication 1, ayant des rainures d'environ 1/4" (0.635 cm) (60) sur la face de la mousse de forme nervurée (56), ladite face étant contigüe à la surface extérieure de ladite première cloison de confinement (10).

16. Le procédé de la Revendication 1, comprenant en outre des parties de ladite citerne assemblées ensemble afin de former un tuyau conducteur sans soudure.

17. Le procédé de la Revendication 1, dans lequel le matériau de résine de l'étape (b) comprend en outre une résine vinylique.

18. Le procédé de la Revendication 1, dans lequel le matériau de résine des étapes (c), (d), (f), (h) et (i) comprend en outre une résine polyester.

19. Le procédé de la Revendication 1, comprenant en outre les étapes de :
a. assembler un revêtement fait de carton sur une forme ou moule appropriée ;
b. appliquer une première tôle sur ledit carton ;
c. appliquer un matériau de résine avec un voile de fibre de verre sur ladite première tôle ; et
d. appliquer un matériau de résine à fibres de verre coupées sur ledit voile afin de former une barrière hautement résistante chimiquement.

20. Une citerne à multi-cloisons pour le transport et le stockage de fluides, comprenant ;
a. une première cloison de confinement (10) composée de fibre de verre coupée et de fils continus de fibre de verre fixés les uns aux autres par la résine polyester, ladite première cloison ayant une épaisseur d'environ 0.300" (0.762 cm) à 0.330" (0.838 cm) ;
b. une barrière hautement résistante chimiquement sur la surface intérieure de ladite première cloison de confinement ;
c. une pluralité de nervures de support substanciellement circonférentielles (16) intégralement collées à ladite première cloison de confinement (10) ; et
d. une première couche de mousse à cellules fermées (56) se trouvant entre la première cloison de confinement (10) et les surfaces intérieures desdites nervures de support (16) ; caractérisée par :
e. lesdites nervures de support (16) ayant des pieds chacun d'une longueur d'environ 2.0" (5.08 cm) au moyen desquels les nervures de support deviennent intégralement collées à ladite première cloison de confinement (10);
f. une deuxième cloison de confinement (14) composée de fibre de verre coupée et des fils continus de fibre de verre fixés les uns aux autres par une résine polyester, ladite deuxième cloison ayant une épaisseur d'environ 0.250" (0.635 cm) à 0.300" (0.762 cm) ;
g. ladite deuxième cloison de confinement (14) n'ayant pas d'ondulations ;
h. ladite deuxième cloison de confinement (14) étant intégralement collée aux extrémités supérieures desdites nervures de support (16) ;
i. une deuxième couche de mousse à cellules fermées (62) se trouvant dans l'espace interstitiel entre ladite première cloison de confinement (10), ladite deuxième cloison de confinement (14) et les surfaces extérieures desdites nervures de support (16) ; et
j. ladite deuxième couche de mousse à cellules fermées (62) étant à niveau avec l'extrémité supérieure des nervures de support (16).

21. La citerne de la Revendication 20, dans laquelle lesdites première et deuxième couches de mousse à cellules fermées sont composées de polyuréthane (12).

22. La citerne de la Revendication 20, comprenant en outre un moniteur de sécurité avertisseur de fuite pour détecter des suintements de liquides.

23. La citerne de la Revendication 22, dans laquelle ledit moniteur de sécurité avertisseur de fuite comprend en outre un conduit (18) s'étendant longitudinalement sur la longueur de ladite citerne.

24. La citerne de la Revendication 23, dans laquelle ledit conduit (18) est contigu à la surface extérieure de ladite première cloison de confinement (10).

25. La citerne de la Revendication 23 dans laquelle ledit conduit (18) est entièrement enrobé par les pieds desdites nervures de support (16).

26. La citerne de la Revendication 20, comprenant en outre des fonds bombés (20) sans lignes de joint entre lesdites cloisons de ladite citerne et les cloisons desdits fonds bombés.

27. La citerne de la Revendication 26, dans laquelle lesdites cloisons de ladite citerne et lesdites cloisons desdits fonds bombés (20) constituent en outre une seule partie.

28. La citerne de la Revendication 20, dans laquelle un espace d'environ 1/8" (0.3175 cm) est ménagé entre ladite première couche de mousse à cellules fermées (56) et ladite première cloison de confinement (10).

29. La citerne de la Revendication 22, dans laquelle ledit conduit du moniteur de sécurité avertisseur de fuite (18) localise la fuite sur la longueur de ladite citerne.

30. La citerne de la Revendication 22, dans laquelle ledit conduit du moniteur de sécurité avertisseur de fuite (18) s'étend jusqu'au milieu approximatif desdits fonds bombés et surveille ainsi des fuites susceptibles d'arriver dans les fonds bombés (20) de ladite citerne.

31. La citerne de la Revendication 20, dans laquelle des rainures (60) d'environ 1/4" (0.635 cm) sont ménagées sur la face de la première couche de mousse à cellules fermées (56), ladite face étant contigüe à la surface extérieure de ladite première cloison de confinement (10).

32. La citerne de la Revendication 20, comprenant en outre des parties de ladite citerne assemblées ensemble afin de former un tuyau conducteur sans soudure.
